(19) **Europäisches Patentamt / European Patent Office / Office européen des brevets**

(11) **EP 4 769 002 A1**

(12) **EUROPEAN PATENT APPLICATION**
published in accordance with Art. 153(4) EPC

(43) Date of publication:
**01.07.2026 Bulletin 2026/27**

(21) Application number: **25803041.0**

(22) Date of filing: **15.05.2025**

(51) International Patent Classification (IPC):
$G02B\ 21/36^{(2006.01)}$    $G02B\ 21/00^{(2006.01)}$
$G01B\ 11/22^{(2006.01)}$    $G06T\ 17/00^{(2006.01)}$

(52) Cooperative Patent Classification (CPC):
**G01B 11/22; G02B 21/00; G02B 21/36; G06T 17/00**

(86) International application number:
**PCT/CN2025/095074**

(87) International publication number:
**WO 2025/237365 (20.11.2025 Gazette 2025/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.03.2025 CN 202510259621**

(71) Applicant: **Shenzhen Hanswell Technology Co., Ltd.**
**Shenzhen, Guangdong 518000 (CN)**

(72) Inventors:
• **WEI, Yuming**
  **Shenzhen, Guangdong 518000 (CN)**
• **HUANG, Tao**
  **Shenzhen, Guangdong 518000 (CN)**
• **YANG, Yang**
  **Shenzhen, Guangdong 518000 (CN)**
• **HUANG, Gan**
  **Shenzhen, Guangdong 518000 (CN)**
• **ZHAI, Aiting**
  **Shenzhen, Guangdong 518000 (CN)**

(74) Representative: **Manitz Finsterwald**
**Patent- und Rechtsanwaltspartnerschaft mbB**
**Martin-Greif-Straße 1**
**80336 München (DE)**

(54) **MICROSCOPIC IMAGING APPARATUS AND METHOD HAVING DEPTH RECONSTRUCTION EFFECT**

(57) A microscopic imaging apparatus and method having a depth reconstruction effect, the method comprising: acquiring, via an image acquisition assembly, a first image and a second image of an object under test; acquiring an offset loss value for each pixel point at a corresponding object distance based on inverse filters for first and second image capture devices corresponding to a plurality of predetermined object distances and a transformation matrix between the first and second image capture devices at each object distance; and obtaining a depth value for that pixel point based on the offset loss values of the pixel point at all the object distances, thereby completing depth reconstruction and obtaining an extended depth-of-field image and a depth map. By incorporating a specially designed phase mask, an optical extended depth-of-field effect is achieved. Since the depth reconstruction process requires neither multiple image acquisitions nor a displacement platform, the extended depth-of-field image and the depth image can be obtained through a single capture with dual cameras, making the process simpler, more efficient, and more readily implementable.

obtaining, for each of a plurality of predetermined object distances, the corresponding inverse filters for the first and second image capture devices and the transformation matrix between the first and second image capture devices for that object distance — S100

controlling the first and second image capture devices to simultaneously acquire an image of the object under test, thereby obtaining a first image and a second image — S110

determining an offset loss value for each pixel point at each of the plurality of predetermined object distances, based on the obtained first and second images — S120

determining a depth value for each pixel point based on the offset loss values of that pixel point at all the predetermined object distances, the depth values of all pixel points collectively forming a depth map of the object under test, thereby completing the depth reconstruction — S130

**FIG. 1**

EP 4 769 002 A1

**Description**

**TECHNICAL FIELD**

The present disclosure relates to the field of microscopic three-dimensional imaging, and specifically, to a microscopic imaging apparatus and method having a depth reconstruction effect.

**BACKGROUND OF THE DISCLOSURE**

With the development in fields such as mold design, precision machining, product inspection, and industrial measurement, conventional two-dimensional image sensor technology increasingly fails to meet the needs of production scenarios, while the demand for three-dimensional measurement technology is growing rapidly. Compared to two-dimensional image sensor technology, three-dimensional measurement technology provides an additional dimension of depth information. Moreover, since depth itself is less sensitive to factors such as orientation and illumination, three-dimensional measurement technology offers greater advantages in tasks such as object recognition and measurement.

In the field of microscopic three-dimensional imaging, due to the extremely shallow depth of field of the objective lens, it is often necessary to rely on motion mechanisms and image synthesis to achieve an extended depth-of-field effect and to acquire depth information of an object's surface. Current mainstream three-dimensional reconstruction schemes for microscopes involve interferometry or multi-focus image fusion. These schemes typically require a displacement platform to move along the optical (depth-of-field) axis, capturing multiple images at different positions to synthesize a target image. However, the use of the displacement platform and the time-multiplexed sampling introduce system motion-induced errors, which lead to inaccuracies in the final measurement results.

**SUMMARY OF THE DISCLOSURE**

The present disclosure primarily addresses the technical problem of how to perform depth reconstruction without using a displacement platform and multiple image acquisitions.

According to a first aspect, an embodiment of the present disclosure provides a microscopic imaging apparatus having a depth reconstruction effect. The apparatus comprises: a microscopic objective lens, a tube lens, a light source, a lifting platform, and a plurality of beam splitters. The apparatus further comprises:

a phase mask disposed between the microscopic objective lens and one of the plurality of beam splitters;

an image acquisition assembly comprising at least a first image capture device and a second image capture device, wherein the first and second image capture devices each have a corresponding inverse filter for each of a plurality of predetermined object distances, and wherein a transformation matrix is defined between the first and second image capture devices for each of the plurality of predetermined object distances;

and a processor, configured to:

control the lifting platform to move in a vertical direction based on a predetermined movement step;

obtaining, for each of the plurality of predetermined object distances, the corresponding inverse filter for each of the first and second image capture devices and the transformation matrix between the first and second image capture devices;

control the first and second image capture devices to simultaneously acquire an image of an object under test, thereby obtaining a first image and a second image;

for each of the plurality of predetermined object distance: filter the first image using the inverse filter corresponding to the first image capture device at that object distance, to obtain a third image corresponding to that object distance; filter the second image using the inverse filter corresponding to the second image capture device at that object distance, to obtain the fourth image corresponding to that object distance; perform a rigid-body transformation on the fourth image according to the transformation matrix between the first and second image capture devices at that object distance, to obtain a fifth image corresponding to that object distance; and determine an offset loss value for each pixel point at that object distance based on a pixel value of that pixel point in the third image and the fifth images; and

obtain a depth value for each pixel point based on the offset loss value of that pixel point at all of the plurality of predetermined object distances, wherein depth values of all pixel points collectively form a depth map of the object under test, thereby completing depth reconstruction.

According to a second aspect, an embodiment of the present disclosure provides a microscopic imaging method having a depth reconstruction effect, the method comprising:

obtaining, via an image acquisition assembly comprising at least a first image capture device and a second image capture device, a first image and a second image of an object under test, wherein the first and second image capture devices operate simultaneously to obtain the first image and the second image, respectively, and wherein the first and second image capture devices each have a corresponding inverse filter for each of a plurality of predetermined object distances, and a corresponding transformation matrix is defined between the first and second image capture devices for each of the plurality of predetermined object distances;

for each of the plurality of predetermined object distances: filtering the first image using the inverse filter corresponding to the first image capture device at that object distance, to obtain a third image corresponding to that object distance; filtering the second image using the inverse filter corresponding to the second image capture device at that object distance, to obtain a fourth image corresponding to that object distance; and performing a rigid-body transformation on the fourth image according to the transformation matrix corresponding to that object distance, to obtain a fifth image corresponding to that object distance; and determining an offset loss value for each pixel point at that object distance based on pixel values of that pixel point in the third image and the fifth image; and

determining a depth value for each pixel point based on the offset loss values of that pixel point at all the predetermined object distances, wherein the depth values of all pixel points collectively form a depth map of the object under test.

According to the microscopic imaging apparatus and method of the above embodiments, by incorporating a specially designed phase mask into the optical system, the point spread function (PSF) after imaging maintains a consistent shape within a certain range. This significantly extends the depth of field of the optical system, achieving an optical extended depth-of-field effect, and alleviates the problem of an extremely shallow depth of field in conventional microscopes caused by a large aperture. In the depth reconstruction process, the inverse filters corresponding to the different image capture devices and the transformation matrices between different image capture devices, obtained during calibration, are first utilized to implicitly establish a correspondence between different object distances and differences in the offset of the PSFs corresponding to different image capture devices, thereby recording the variation of the PSF offset for each image capture device with the object distance. Subsequently, during actual use, the true depth of the surface of the object under test is determined based on the offset loss values corresponding to different object distances, thereby completing the depth reconstruction and obtaining a corresponding extended depth-of-field image. Since the depth reconstruction process eliminates the need for multiple image acquisitions or a displacement platform, both an extended depth-of-field image and a depth image can be obtained through a single capture by the dual cameras. This makes the entire process simpler and more efficient. Furthermore, by filtering the images using the inverse filters corresponding to different object distances to restore them to their original state, the triangular smearing (an artifact) produced when any point passes through the phase mask is eliminated, thereby solving the problem of imaging artifacts present in traditional phase-mask-based reconstruction methods. Furthermore, because the present disclosure requires no special auxiliary illumination and all optical components except the phase mask are commercially available standard items, the disclosed apparatus and method are more readily implement.

**BRIEF DESCRIPTION OF THE DRAWINGS**

FIG. 1 is a processing flowchart of a processor in a microscopic imaging apparatus having a depth reconstruction effect;

FIG. 2 is a flowchart of a microscopic imaging method having a depth reconstruction effect;

FIG. 3 is a structural schematic diagram of a microscopic imaging apparatus having a depth reconstruction effect;

FIG. 4 is a schematic diagram showing the shape of the point spread function (PSF) with a phase mask incorporated;

FIG. 5 is a schematic diagram showing the offset changes of different image capture devices at different object distances;

FIG. 6 is an image of a portion of a standard object as shown in a first standard image;

FIG. 7 is a schematic diagram of a depth reconstruction result; and

FIG. 8 is a blur pattern formed by a pinhole of the standard object.

Reference numerals: 11: microscope objective; 12: tube lens; 13: light source; 14: elevating platform; 15: beam splitter; 16: phase mask; 17: image acquisition assembly.

## DETAILED DESCRIPTION

Specific embodiments of the present disclosure will now be described in detail with reference to the accompanying drawings. Similar or related components in different embodiments are labeled with associated reference numerals. The following embodiments include detailed descriptions in order to facilitate understanding of the present disclosure. However, those skilled in the art will readily appreciate that certain features may be omitted under particular circumstances or substituted with other elements, materials, or methods. In some instances, certain operations related to the present disclosure are not explicitly described or illustrated herein. This is done to avoid obscuring the core aspects of the present disclosure. For those skilled in the art, a complete understanding of these operations can be attained through the descriptions provided in this specification and general technical knowledge in the art.

Additionally, the features, operations, or characteristics described in the specification may be combined in any suitable manner to form various embodiments. Similarly, steps or actions in the method descriptions may be reordered or modified in ways that would be obvious to those skilled in the art. Therefore, the sequences presented in the specification and drawings are intended solely to clarify the description of specific embodiments and do not imply mandatory orderings, unless explicitly stated that a particular sequence is required.

The numerical designations assigned to components herein, such as "first", "second", and the like, are used solely to distinguish between the described objects and carry no implication of order or technical significance. The terms "connected" and "coupled" as used herein, unless otherwise specified, encompass both direct and indirect connections (including mechanical and electrical connections).

Phase masks belong to the wavefront coding technique, which extends the depth of field of an optical system by modulating the pupil phase distribution function, thereby greatly expanding the depth of field of the optical system. The point spread function (PSF) of such a system, while exhibiting a certain offset at different object distances, remains nearly identical in shape, size, and blur distribution.

Embodiments of the present disclosure are directed to specially designed optical elements (i.e., phase masks) that render the modulation transfer function (MTF) and the shape of the PSF of the optical system insensitive to the object distance. This not only significantly extends the depth of field of the optical system, but also, by leveraging the imaging characteristics of a microscopic imaging system, enables dual cameras to obtain depth information of an object's surface from a single capture. Consequently, results featuring both an extended depth-of-field and depth reconstruction are achieved without using a displacement platform or multiple samplings.

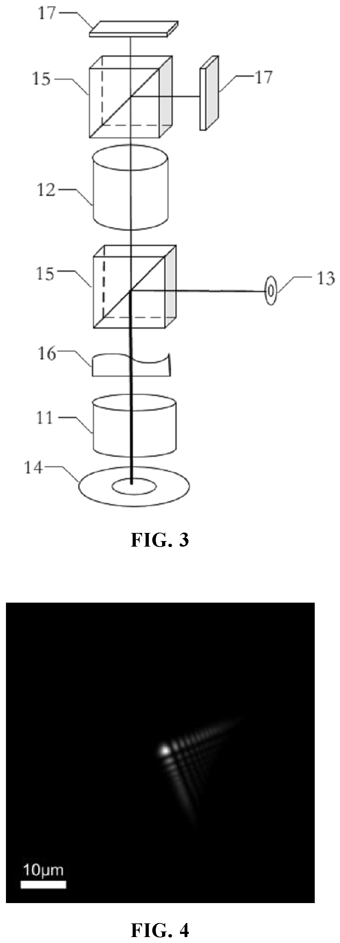

Some embodiments provide a microscopic imaging apparatus having a depth reconstruction effect. A structural schematic diagram of the apparatus is shown in FIG. 3. The apparatus includes a microscopic objective lens 11, a tube lens 12, a light source 13, a lifting platform 14, and a plurality of beam splitters 15. The apparatus further includes a phase mask 16, an image acquisition assembly 17, and a processor. In the microscopic imaging apparatus of this embodiment, light from the incoherent light source 13 illuminates an object under test, passes through the microscopic objective lens 11, is modulated by the phase mask 16, and then, after passing through the beam splitters 15, is respectively imaged on two image acquisition assemblies 17 of the same model that are positioned at different image distances. The details are described below.

The phase mask 16 in this embodiment is a bicubic phase mask, which is located between the microscopic objective lens 11 and one of the beam splitters 15. By placing the phase mask 16 with a special surface profile at the pupil of the microscopic objective lens 11, the phase distribution function at the pupil is modulated. This renders the shapes of the modulation transfer function and the point spread function of the optical system insensitive to the object distance, while simultaneously utilizing the wavefront coding technique to greatly extend the depth of field of the optical system. The bicubic constraint satisfied by the optically optimized phase distribution function at the pupil is given by:

$$\varphi(u,v) = 2\pi\alpha(u^3 + v^3)$$

where $\varphi(u,v)$ represents the phase distribution function, $u$ and v are the positional coordinates on the pupil, and a is a gain coefficient that controls the surface bending strength, which is optimized by optical software (e.g. Zemax).

The image acquisition assembly 17 in this embodiment includes at least a first image capture device and a second image capture device. The first and second image capture devices each have a corresponding inverse filter for each of a plurality of predetermined object distances, and for each of the predetermined object distances, a corresponding transformation matrix is defined between the first and second image capture devices for transforming the images simultaneously captured by them into a common coordinate system.

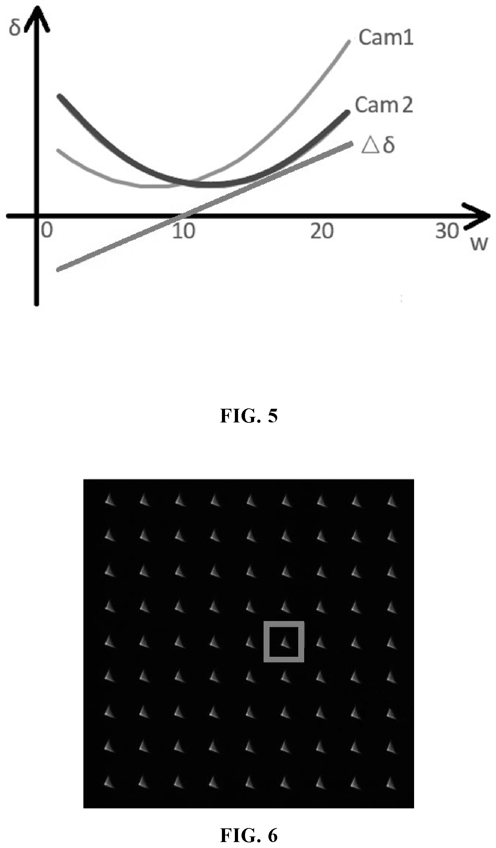

It should be noted that the optical system incorporating the phase mask exhibits the following characteristics. First, the modulation transfer function (MTF) of the optical imaging system does not fall to zero, allowing deconvolution to be used to perform the inverse transformation of image degradation; that is, to restore the output image of the optical system to the original input image. Second, the shape of the intensity distribution corresponding to the point spread function (PSF) of the optical system remains unchanged over a large range of object distances (the extended depth-of-field range), taking the form of a triangular diffraction pattern that is offset from the center. Within this extended depth-of-field range, although the shape of the intensity distribution does not change, the position of the image spot formed by a single point source after passing through the phase mask shifts;, i.e., the center of the spot is offset. This offset varies with the working distance (or object distance). The functional relationship $\delta(w)$ between the offset and the working distance is approximately parabolic. The changes in the offset ($\delta$) of the point spread function for different image capture devices at different object distances are shown in FIG. 5, where $\delta$ represents the offset and w represents the working distance/object distance.

According to the imaging characteristics of the bicubic phase mask, if two image capture devices are fixed at different image distances so that they maintain a fixed back focal length difference, then the difference between their corresponding offsets at the same object distance and the working distance constitute a function $\Delta\delta(w)$ that is monotonic and continuous, as shown in FIG. 5. If the correspondence between the offset difference and the working distance is predetermined, the corresponding working distance can be determined during real-time image acquisition from the calculated offset difference.

In this embodiment, the process of obtaining the correspondence between the offset difference and the working distance is referred to as a calibration process. Through this calibration, the inverse filters corresponding to a plurality of predetermined object distances for the first and second image capture devices, as well as the transformation matrix between them at each other distance, are obtained.

During this calibration process, the processor controls the lifting platform 14 to move along the vertical direction based on a predetermined step size. After each movement of the lifting platform 14, the processor controls the image acquisition assembly 17 to capture an image of a preset standard object, thereby obtaining images of the standard object at multiple predetermined object distances. The standard object, which is placed on the lifting platform, is an opaque plate comprising a set of uniformly spaced ultra-fine pinholes. A backlight surface source is provided for illumination, so as to backlight the ultra-fine pinholes on the opaque plate. The specific calibration process of this embodiment is as follows: First, an opaque plate with evenly spaced ultra-fine pinholes is used as the preset standard object and is placed on a lifting platform 14 equipped with a stepping motor. A backlight source is set to illuminate the pinholes on the opaque plate, wherein the lifting direction of the lifting platform 14 is perpendicular to the optical axis of the objective lens. Then, starting from a nominal working distance of zero, the lifting platform 14 is controlled to move in the vertical direction based on a predetermined step size. For example, the predetermined step size may be set to 1 $\mu m$, corresponding to the lifting platform 14 moving upward by 1 $\mu m$ per step. After each movement of the lifting platform 14, the image acquisition assembly 17 captures an image of the preset standard object. This process continues until the working distance exceeds a predetermined range. For each movement, the corresponding position of the lifting platform 14 and the two images of the standard object simultaneously captured by the first and second image capture devices are recorded. In this way, two images of the standard object are obtained for each of a plurality of different object distances. For each such object distance, the two images obtained by the first and second image capture devices are respectively referred to as a first standard image and a second standard image.

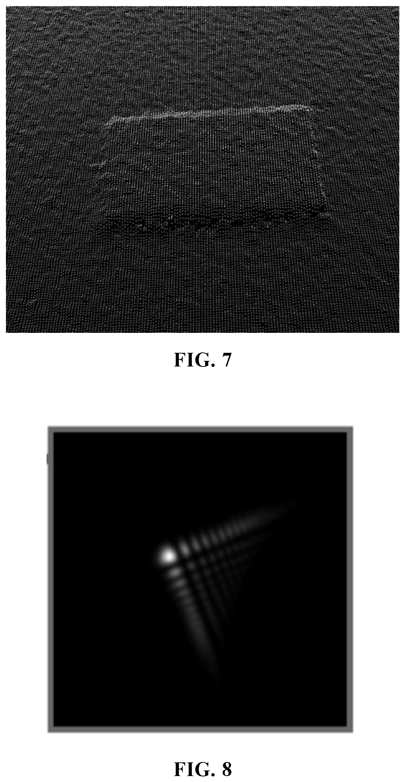

In this embodiment, when the pinholes on the opaque plate are illuminated by the backlight surface source, the light originally concentrated at a point forms a diffused light spot on the image plane. As shown in FIG. 4, the light intensity distribution from a point source after passing through the phase mask manifests as a triangular smear. This light intensity distribution of the spot constitutes the PSF of the system. The corresponding PSF functions are calculated, for example using optical software (e.g., Zemax), based on the blur patterns formed by the pinholes on the opaque plate in the first standard image and the second standard image, respectively. An image of a portion of the standard object corresponding to the first standard image is shown in FIG. 6. FIG. 8 is a magnified view of a section of FIG. 6, showing the blur pattern formed by an individual pinhole of the standard object.

Since the modulation transfer function of the system contains no zeros and the shape of the point spread function (PSF) is insensitive to the field of view position, the inverse can be computed using a Fourier transform. A Wiener filter is then employed to construct the corresponding inverse filter for the obtained PSF. That is, for a given object distance, the inverse filter for the first image capture device at that object distance is obtained based on the PSF corresponding to the first standard image. Similarly, the inverse filter for the second image capture device at this object distance is obtained based on the PSF corresponding to the second standard image. In this way, the inverse filters for both the first and second image capture devices at that object distance are obtained.

Subsequently, the first and second standard images are respectively filtered using the obtained inverse filter, thereby restoring the degraded images (which contain noise from the point spread function) to clear, original image. Specifically, the first standard image is filtered with the inverse filter corresponding to the first image capture device at that object distance to obtain a third standard image, and the second standard image is filtered with the inverse filter corresponding to the second image capture device at that object distance to obtain a fourth standard image. In this way, the first and second standard images are restored to the original images containing the array of ultra-fine pinhole on the standard object. That is, the third and fourth standard images now contain arrays of circular dots uniformly spaced, with each dot corresponding to an individual ultra-fine pinhole on the standard object.

The center point coordinates of each circular dot in the third and fourth standard images are obtained, for example, by applying a circular dot extraction algorithm. Because each ultra-fine pinhole on the standard object has a corresponding circular dot in both the third and fourth standard images, a transformation matrix can be calculated using a linear least squares method based on the center point coordinates of the corresponding dots, that is:

$$Points_w^{cam1} = T_w * Points_w^{cam2}$$

where $cam1$ denotes the first image capture device; $cam2$ denotes the second image capture device; $Points_w^{cam1}$ is a matrix formed by the center point coordinates of all circular dots in the third standard image corresponding to the first image capture device at object distance w; $Points_w^{cam2}$ is a matrix formed by the center point coordinates of all circular dots in the fourth standard image corresponding to the second image capture device at object distance w; and Tw is the transformation matrix between the first image capture device and the second image capture device at object distance w, the transformation matrix being a rigid-body transformation matrix including rotation and translation components.

The variation in the offset value induced by the change in object distance can also be determined from the center point coordinates of corresponding circular dots in the images captured by the dual cameras. Therefore, the transformation matrix, while serving to convert the images from the first and second image capture devices into a common coordinate system, implicitly incorporates the difference in the offset values between the two devices. Consequently, for each object distance, its corresponding transformation matrix implicitly establishes a correspondence between that (respective) object distance and the associated offset difference.

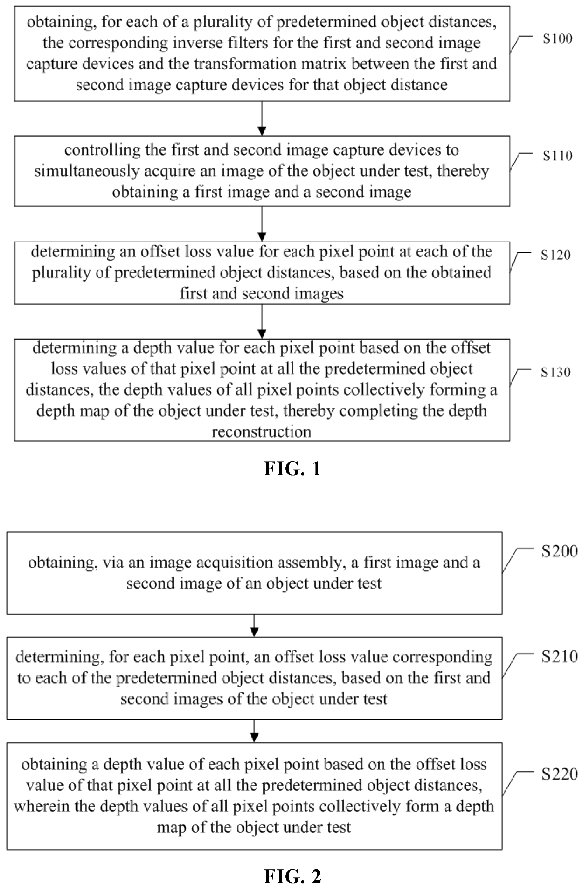

In this embodiment, the processor is further configured to perform depth reconstruction to obtain a depth map and an extended depth-of-field image. A processing flow of the depth reconstruction performed by the processor is shown in FIG. 1, including:

Step S100: obtaining, for each of a plurality of predetermined object distances, the corresponding inverse filters for the first and second image capture devices and the transformation matrix between the first and second image capture devices for that object distance.

This step involves obtaining, for each predetermined object distance, the inverse filters for the first and second image capture devices and the transformation matrix between them, all of which are obtained from the calibration process.

Step S110: controlling the first and second image capture devices to simultaneously acquire an image of the object under test, thereby obtaining a first image and a second image.

The object under test is disposed on a plane at an (unknown) object distance m. Thus, this embodiment only requires that the object under test remains stationary within the field of view of the image capture devices; the specific object distance m need not be known.

Step S120: determining an offset loss value for each pixel point at each of the plurality of predetermined object distances, based on the obtained first and second images.

Since the function $\Delta\delta(w)$ constituted by the offset difference and the corresponding working distance is monotonic and continuous, for any pixel point p within the imaging range of the image capture devices, there exists a unique object distance z that satisfies:

$$||I^{cam1} * psf_{cam1}^{-1}(z)) - T_z \cdot (I^{cam2} * psf_{cam2}^{-1}(z))|| = 0$$

where, $I^{cam1}$ is the image captured by the first image capture device, corresponding to the first image in this embodiment; $I^{cam2}$ is the image captured by the second image capture device, corresponding to the second image in this embodiment;

$$psf_{cam1}^{-1}(z)$$ denotes the inverse filter for the first image capture device at object distance z; $$psf_{cam2}^{-1}(z)$$ denotes the inverse filter for the second image capture device at object distance z; $T_z$ denotes the transformation matrix between the first and second image capture devices at object distance z; "$\| \|$" denotes the L2-norm; "$\cdot$" denotes the transformation operation (matrix multiplication); and "*" denotes the convolution operation.

Thus, z is the depth value for pixel point p. This embodiment determines the depth by evaluating, for each of the plurality of predetermined object distances, image transformation based on the corresponding inverse filters and transformation matrices. The difference between the transformed images results from the offset between the point spread functions (PSFs) of the different image capture devices. This difference between corresponding pixel points in the transformed images is defined as the offset loss value for that pixel point. The depth value for a pixel point is then obtained by identifying the object distance that minimizes its offset loss value.

For a given object distance, this involves: filtering the first image using the inverse filter corresponding to the first image capture device at that object distance to obtain a third image corresponding to that object distance; and filtering the second image using the inverse filter corresponding to the second image capture device at that object distance to obtain a fourth image corresponding to that object distance.

Since, in this embodiment, the transformation matrix transforms the filtered image from the second image capture device into the coordinate system of the filtered image from the first image capture device, the fourth image is subjected to a rigid-body transformation based on the transformation matrix between the first and second image capture devices at that object distance, thereby obtaining the fifth image corresponding to that object distance.

Thereafter, the fifth and third images reside in the same coordinate system. The difference between them results from the offset between the PSFs of the different image capture devices. For each pixel point, an offset loss value at that object distance is determined by evaluating the difference between its corresponding pixel values in the third and fifth images.

For example, for each pixel point, the gray values in different channels of that pixel point in the third and fifth images are obtained. A norm (e.g., the L2 norm) is then computed from the differences between these corresponding gray values across channels. This computed norm serves as the offset loss value for that pixel point at the given object distance.

Step S130: determining a depth value for each pixel point based on the offset loss values of that pixel point at all the predetermined object distances, the depth values of all pixel points collectively forming a depth map of the object under test, thereby completing the depth reconstruction.

For each pixel point, the smallest offset loss value among all the predetermined object distances is obtained. The object distance that yields this minimum value is then assigned as the depth value for that pixel point. The ensemble of depth values for all pixel points constitutes the depth map of the object under test, completing the depth reconstruction. FIG. 7 shows the depth reconstruction result for a block-shaped object according to this embodiment.

Furthermore, this embodiment can also obtain an extended depth-of-field image. For each pixel point in the extended depth-of-field image, the third and fifth images corresponding to the depth value of that pixel point (as the object distance) are obtained. Then, for each channel, an average of the gray values for that pixel point from the obtained third and fifth images is computed. This computed average is assigned as the gray value for that pixel point on the corresponding channel in the extended depth-of-field image.

In this embodiment, a specially designed phase mask is incorporated into the optical system. This causes the point spread function (PSF) after imaging to maintain a consistent shape over a certain range, thereby significantly extending the depth of field of the optical system to achieve an extended depth-of-field effect. It also mitigates the problem of an extremely shallow depth of field in conventional microscopes, which is often associated with a large aperture. During depth reconstruction, a correspondence between different object distances and the difference in the offsets of the PSFs corresponding to the different image capture devices is implicitly established, based on the inverse filters and the transformation matrices obtained during calibration. This thereby records how the PSF offset for each image capture device varies with the object distance. Then, during operation, the true depth of the surface of the object under test is inferred from the offset loss values corresponding to different object distances, thereby completing the depth reconstruction and obtaining a corresponding extended depth-of-field image. Since the depth reconstruction process require neither multiple image acquisitions nor a displacement platform, both an extended depth-of-field image and a depth image can be obtained through a single capture with the dual cameras, rendering the process simpler and more efficient. Furthermore, by applying the inverse filters corresponding to various object distances to filter the image-thereby restoring it toward its original state-the triangular smearing (an artifact) produced when any point passes through the phase mask is eliminated. This addresses the problem of imaging artifacts inherent in traditional phase-mask-based reconstruction. Additionally, this embodiment requires no special auxiliary illumination, and all optical components other than the phase mask are commercially available standard items, making the entire solution more readily implementable.

Referring to FIG. 2, some embodiments provide a microscopic imaging method having a depth reconstruction effect, the method including:

Step S200: obtaining, via an image acquisition assembly, a first image and a second image of an object under test.

In this embodiment, the image acquisition assembly at least includes a first image capture device and a second image capture device. The first and second image capture devices simultaneously acquire an image of the object under test, thereby obtaining a first image and a second image, wherein, for each of a plurality of predetermined object distances, the first and second image capture devices each have a corresponding inverse filter, and a transformation matrix is defined between the first image and second image capture devices for transforming their respective images into a common coordinate system.

Step S210: determining, for each pixel point, an offset loss value corresponding to each of the predetermined object distances, based on the first and second images of the object under test.

For each predetermined object distance: the first image is filtered with the inverse filter for the first image capture device at that object distance, to obtain a third image corresponding to that object distance; the second image is filtered with the inverse filter for the second image capture device at that object distance, to obtain a fourth image corresponding to that object distance; and the fourth image is subjected to a rigid-body transformation based on the transformation matrix between the first and second image capture devices at that object distance, to obtain a fifth image corresponding to this object distance. Then, an offset loss value for each pixel point at that object distance is determined based on the pixel values of that pixel point in the third and fifth images.

Step S220: obtaining a depth value of each pixel point based on the offset loss value of that pixel point at all the predetermined object distances, wherein the depth values of all pixel points collectively form a depth map of the object under test.

It should be noted that the method steps in this embodiment correspond to the processing steps of the processor described in the foregoing embodiments. Their specific implementations have been detailed above and thus are not be repeated here.

This embodiment first acquires an image of the object under test (placed at an unknown location) via an image acquisition assembly, thereby obtaining a first image and a second image. The corresponding images are then filtered using the inverse filters for the different image capture devices at various object distances, to remove the point spread function (PSF) noise, thereby restoring them to clear images and obtaining third and fourth images corresponding to those object distances. Next, image transformation is performed using the transformation matrices for the image capture devices at the corresponding object distances, to obtain fifth images corresponding to different object distances. This transforms the images from the different image capture devices into a common coordinate system-specifically, transforming the fourth image into the coordinate system of the third image. The difference between the fifth and third images thus results from the offset of the point spread function. Consequently, for each pixel point, an offset loss value at each object distance is obtained based on that point between the third and fifth images. A depth map for the pixel point is then obtained by minimizing this offset loss value, thereby completing the depth reconstruction and obtaining a corresponding extended depth-of-field image. Since this embodiment requires neither multiple image acquisitions nor a displacement platform, both an extended depth-of-field image and a depth image can be obtained through a single capture with the dual cameras, making the entire process simpler and more efficient.

It will be understood by those skilled in the art that all or part of the functions of the various methods in the foregoing embodiments may be implemented in hardware or by a computer program. When all or part of the functions are implemented by a computer program, the program may be stored in a computer-readable storage medium, such as a read-only memory (ROM), a random access memory (RAM), a magnetic disk, an optical disk, a hard disk (HDD), and the like. The functions described above can be realized by executing the program using a computer. For instance, the program may be stored in a memory of a device, and execution of the program by a processor of the device enables the realization of all or part of the aforementioned functions. Alternatively, when all or part of the functions are implemented by a computer program, the program may also reside on a storage medium such as a server, another computer, a magnetic disk, an optical disk, a flash drive, or a mobile hard disk. The program may then be downloaded or copied to a local device and stored in its memory, or by performing a system version update on the local device. When the program in the memory is executed by a processor, all or part of the functions in the foregoing embodiments may be achieved.

The foregoing specific examples are used to illustrate the present disclosure merely for facilitating understanding thereof, and are not intended to limit the present disclosure. For those skilled in the art to which the present disclosure pertains, several simple deductions, modifications or substitutions may be made based on the concept of the present disclosure.

**Claims**

**1.** A microscopic imaging apparatus having a depth reconstruction effect, comprising: a microscopic objective lens, a tube lens, a light source, a lifting platform, and a plurality of beam splitters,
the apparatus further comprising:

a phase mask disposed between the microscopic objective lens and one of the plurality of beam splitters;
an image acquisition assembly comprising at least a first image capture device and a second image capture device, wherein the first and second image capture devices each have a corresponding inverse filter for each of a plurality of predetermined object distances, and wherein a transformation matrix is defined between the first and second image capture devices for each of the plurality of predetermined object distances; and
a processor, configured to:

control the lifting platform to move in a vertical direction based on a predetermined movement step;
obtain, for each of the plurality of predetermined object distances, the corresponding inverse filter for each of the first and second image capture devices and the transformation matrix between the first and second image capture devices;
control the first and second image capture devices to simultaneously acquire an image of an object under test, thereby obtaining a first image and a second image;
for each of the plurality of predetermined object distance:

filter the first image using the inverse filter corresponding to the first image capture device at that object distance, to obtain a third image corresponding to that object distance;
filter the second image using the inverse filter corresponding to the second image capture device at that object distance, to obtain the fourth image corresponding to that object distance;
perform a rigid-body transformation on the fourth image according to the transformation matrix between the first and second image capture devices at that object distance, to obtain a fifth image corresponding to that object distance; and
determine an offset loss value for each pixel point at that object distance based on a pixel value of that pixel point in the third image and the fifth images; and
obtain a depth value for each pixel point based on the offset loss value of that pixel point at all of the plurality of predetermined object distances, wherein depth values of all pixel points collectively form a depth map of the object under test, thereby completing depth reconstruction.

2. The microscopic imaging apparatus according to claim 1, wherein the phase mask comprises a bicubic phase mask.

3. The microscopic imaging apparatus according to claim 1, wherein the processor is further configured to:
control the image acquisition assembly to acquire an image of a preset standard object after each movement of the lifting platform, thereby obtaining images of the standard object at the plurality of predetermined object distances, wherein the standard object is disposed on the lifting platform.

4. The microscopic imaging apparatus according to claim 3, wherein the preset standard object comprises an opaque plate having a set of uniformly spaced ultra-fine pinholes and provided with a backlight surface source for auxiliary illumination.

5. The microscopic imaging apparatus according to claim 1, wherein the processor is configured to obtain, for each of the plurality of predetermined object distances, the corresponding inverse filter for each of the first and second image capture devices, by:

acquiring images of a preset standard object at the plurality of predetermined object distances with the first and second image capture devices, respectively; and
for each of the plurality of predetermined object distances:

obtaining the inverse filter corresponding to the first image capture device at that object distance based on the image acquired by the first image capture device; and
obtaining the inverse filter corresponding to the second image capture device at that object distance based on the image acquired by the second image capture device.

6. The microscopic imaging apparatus according to claim 1, wherein the processor is configured to obtain, for each of the plurality of predetermined object distances, the transformation matrix between the first and second image capture devices, by:

for each of the plurality of predetermined object distances:

acquiring images of a preset standard object with the first and second image capture devices, the images acquired at that object distance being respectively referred to as a first standard image and a second standard image;

filtering the first standard image with the inverse filter corresponding to the first image capture device at that object distance to obtain a third standard image;

filtering the second standard image with the inverse filter corresponding to the second image capture device at that object distance to obtain a fourth standard image; wherein the third and fourth standard images each contain an array of circular dots uniformly spaced, each dot corresponding to an ultra-fine pinhole on the standard object;

obtaining center point coordinates of each dot in the third standard image and the fourth standard image; and obtaining the transformation matrix based on the center point coordinates of corresponding dots in the third standard image and the fourth standard image, the transformation matrix being a rigid-body transformation matrix comprising rotation and translation.

7. The microscopic imaging apparatus according to claim 1, wherein the processor is configured to determine an offset loss value for each pixel point at that object distance based on a pixel value of that pixel point in the third image and the fifth images, by:

for each pixel point:

obtaining gray values of that pixel point in different channels of the third image and the fifth image, respectively; and

calculating a norm based on differences between the gray values corresponding to that pixel point in different channels, and taking the calculated norm as the offset loss value for that pixel point at that object distance.

8. The microscopic imaging apparatus according to claim 1, wherein the processor is configured to obtain a depth value for each pixel point based on the offset loss value of that pixel point at all of the plurality of predetermined object distances, by: for each pixel point:

obtaining a minimum value among the offset loss values of the pixel point at all of the plurality of predetermined object distances, and

taking the object distance corresponding to the minimum value as the depth value for that pixel point.

9. The microscopic imaging apparatus according to claim 1, wherein the processor is further configured to:

obtain an extended depth-of-field image, wherein for each pixel point in the extended depth-of-field image:

obtaining the third image and the fifth image that correspond to an object distance equal to the depth value of that pixel point taken as the object distance;

calculating an average value of the gray values corresponding to the pixel point in each channel from the obtained third image and fifth image, and

assigning the calculated average value as the gray value for that pixel point in the corresponding channel of the extended depth-of-field image.

10. A microscopic imaging method having a depth reconstruction effect, comprising:

acquiring, via an image acquisition assembly comprising at least a first image capture device and a second image capture device, a first image and a second image of an object under test, wherein the first and second image capture devices perform image acquisition simultaneously, and wherein, for each of a plurality of predetermined object distances, the first and second image capture devices each have a corresponding inverse filter and a corresponding transformation matrix is defined between the first and second image capture device;

for each of the plurality of predetermined object distances:

filtering the first image using the inverse filter corresponding to the first image capture device at that object distance, to obtain a third image corresponding to that object distance;

filtering the second image using the inverse filter corresponding to the second image capture device at that object distance, to obtain a fourth image corresponding to that object distance;

performing a rigid-body transformation on the fourth image according to the transformation matrix between the first and second image capture devices at that object distance, to obtain a fifth image corresponding to that object distance; and

determining an offset loss value for each pixel point at that object distance based on a pixel value of that pixel point in the third image and the fifth images; and

obtaining a depth value for each pixel point based on the offset loss value of that pixel point at all of the plurality of predetermined object distances, wherein depth values of all pixel points collectively form a depth map of the object under test.

11. The microscopic imaging method according to claim 10, wherein the first and second image capture devices each have a corresponding inverse filter for each of a plurality of predetermined object distances, the corresponding inverse filters are obtained by:

acquiring images of a preset standard object at the plurality of predetermined object distances with the first and second image capture device, respectively; and

for each of the plurality of predetermined object distances:

obtaining the inverse filter corresponding to the first image capture device at that object distance based on the image acquired by the first image capture device; and

obtaining the inverse filter corresponding to the second image capture device at that object distance based on the image acquired by the second image capture device.

12. The microscopic imaging method according to claim 11, wherein the preset standard object comprises: an opaque plate having a set of uniformly space ultra-fine pinholes.

13. The microscopic imaging method according to claim 10, wherein for each of a plurality of predetermined object distances, a corresponding transformation matrix defined between the first and second image capture device is obtained by:

for each of the plurality of predetermined object distances:

acquiring images of a preset standard object with the first and second image capture devices, the images acquired at that object distance being respectively referred to as a first standard image and a second standard image;

filtering the first standard image with the inverse filter corresponding to the first image capture device at that object distance to obtain a third standard image;

filtering the second standard image with the inverse filter corresponding to the second image capture device at that object distance to obtain a fourth standard image; wherein the third and fourth standard images each contain an array of circular dots uniformly spaced, each dot corresponding to an ultra-fine pinhole on the standard object; obtaining center point coordinates of each dot in the third standard image and the fourth standard image; and obtaining the transformation matrix based on the center point coordinates of corresponding dots in the third standard image and the fourth standard image, the transformation matrix being a rigid-body transformation matrix comprising rotation and translation.

14. The microscopic imaging method according to claim 10, wherein the determination of an offset loss value for each pixel point at that object distance based on a pixel value of that pixel point in the third image and the fifth images, comprises:

for each pixel point:

obtaining gray values of that pixel point in different channels of the third image and the fifth image, respectively; and

calculating a norm based on differences between the gray values corresponding to that pixel point in different channels, and taking the calculated norm as the offset loss value for that pixel point at that object distance.

15. The microscopic imaging method according to claim 10, wherein the obtaining of a depth value for each pixel point based on the offset loss value of that pixel point at all of the plurality of predetermined object distances, comprises:

for each pixel point:

obtaining a minimum value among the offset loss values of the pixel point at all of the plurality of predetermined object distances, and

taking the object distance corresponding to the minimum value as the depth value for that pixel point.

16. The microscopic imaging method according to claim 10, further comprising:

   obtain an extended depth-of-field image, wherein for each pixel point in the extended depth-of-field image:
   obtaining the third image and the fifth image that correspond to an object distance equal to the depth value of that pixel point taken as the object distance;
   calculating an average value of the gray values corresponding to the pixel point in each channel from the obtained third image and fifth image, and
   assigning the calculated average value as the gray value for that pixel point in the corresponding channel of the extended depth-of-field image.

17. A computer-readable storage medium having stored there on a computer program executable by a processor to implement the method according to any one of claims 10 to 16.

obtaining, for each of a plurality of predetermined object distances, the corresponding inverse filters for the first and second image capture devices and the transformation matrix between the first and second image capture devices for that object distance — S100

controlling the first and second image capture devices to simultaneously acquire an image of the object under test, thereby obtaining a first image and a second image — S110

determining an offset loss value for each pixel point at each of the plurality of predetermined object distances, based on the obtained first and second images — S120

determining a depth value for each pixel point based on the offset loss values of that pixel point at all the predetermined object distances, the depth values of all pixel points collectively forming a depth map of the object under test, thereby completing the depth reconstruction — S130

**FIG. 1**

obtaining, via an image acquisition assembly, a first image and a second image of an object under test — S200

determining, for each pixel point, an offset loss value corresponding to each of the predetermined object distances, based on the first and second images of the object under test — S210

obtaining a depth value of each pixel point based on the offset loss value of that pixel point at all the predetermined object distances, wherein the depth values of all pixel points collectively form a depth map of the object under test — S220

**FIG. 2**

**FIG. 3**

**FIG. 4**

**FIG. 5**

**FIG. 6**

**FIG. 7**

**FIG. 8**

## INTERNATIONAL SEARCH REPORT

| International application No. |
| --- |
| **PCT/CN2025/095074** |

**A. CLASSIFICATION OF SUBJECT MATTER**

G02B 21/36(2006.01)i; G02B 21/00(2006.01)i; G01B 11/22(2006.01)i; G06T 17/00(2006.01)i

According to International Patent Classification (IPC) or to both national classification and IPC

**B. FIELDS SEARCHED**

Minimum documentation searched (classification system followed by classification symbols)

IPC: G02B G01B G06T

Documentation searched other than minimum documentation to the extent that such documents are included in the fields searched

Electronic data base consulted during the international search (name of data base and, where practicable, search terms used)

CNTXT: CNKI; VEN; ENTXT; ENTXTC; WPABS; WPABSC: 显微镜, 逆滤波, 变换, 偏移, 深度, 景深, 升降, 图像, 拍摄, 摄像, microscope, inverse, filter+, transform, offset, depth, lift, image, camera

**C. DOCUMENTS CONSIDERED TO BE RELEVANT**

| Category* | Citation of document, with indication, where appropriate, of the relevant passages | Relevant to claim No. |
| --- | --- | --- |
| PX | CN 119805729 A (SHENZHEN HANSWELL TECHNOLOGY CO., LTD.) 11 April 2025 (2025-04-11)<br>claims 1-17, description, paragraphs [0004]-[0031], and figures 1-8 | 1-17 |
| A | CN 102768412 A (SONY CORP.) 07 November 2012 (2012-11-07)<br>description, paragraphs [0027]-[0066], and figures 1A-6 | 1-17 |
| A | CN 101048691 A (AUTOMATIC RECOGNITION & CONTROL INC.) 03 October 2007 (2007-10-03)<br>entire document | 1-17 |
| A | CN 112649872 A (CHINA PETROLEUM & CHEMICAL CORP. et al.) 13 April 2021 (2021-04-13)<br>entire document | 1-17 |
| A | CN 102959945 A (KONINKL PHILIPS ELECTRONICS N.V.) 06 March 2013 (2013-03-06)<br>entire document | 1-17 |
| A | CN 110431840 A (SONY CORP.) 08 November 2019 (2019-11-08)<br>entire document | 1-17 |

☑ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 September 2025** | **23 September 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/095074**

| C. | DOCUMENTS CONSIDERED TO BE RELEVANT | |
|---|---|---|
| Category* | Citation of document, with indication, where appropriate, of the relevant passages | Relevant to claim No. |
| A | US 2024169492 A1 (VARJO TECHNOLOGIES OY) 23 May 2024 (2024-05-23)<br>entire document | 1-17 |

Form PCT/ISA/210 (second sheet) (July 2022)

**INTERNATIONAL SEARCH REPORT**
Information on patent family members

International application No.

**PCT/CN2025/095074**

| Patent document cited in search report | | | Publication date (day/month/year) | Patent family member(s) | | | Publication date (day/month/year) |
|---|---|---|---|---|---|---|---|
| CN | 119805729 | A | 11 April 2025 | None | | | |
| CN | 102768412 | A | 07 November 2012 | None | | | |
| CN | 101048691 | A | 03 October 2007 | CN | 100594398 | C | 17 March 2010 |
| CN | 112649872 | A | 13 April 2021 | None | | | |
| CN | 102959945 | A | 06 March 2013 | None | | | |
| CN | 110431840 | A | 08 November 2019 | None | | | |
| US | 2024169492 | A1 | 23 May 2024 | US | 12112457 | B2 | 08 October 2024 |

Form PCT/ISA/210 (patent family annex) (July 2022)